# EUROPÄISCHE PATENTSCHRIFT

(11) **EP 4 381 187 B1**
(45) Veröffentlichungstag und Bekanntmachung des Hinweises auf die Patenterteilung: **09.04.2025**
(21) Anmeldenummer: 22727029.5
(22) Anmeldetag: 29.04.2022
(51) Int. Cl.: F03B 1/02, F03B 3/12

(54) **BAUTEIL EINER HYDROELEKTRISCHEN TURBINE UND VERFAHREN ZUR HERSTELLUNG**
COMPONENT OF A HYDROELECTRIC TURBINE AND METHOD OF PRODUCTION
ÉLÉMENT D'UNE TURBINE HYDROÉLECTRIQUE ET PROCÉDÉ DE PRODUCTION

(30) Priorität: 03.08.2021 DE 102021120120
(43) Veröffentlichungstag der Anmeldung: 12.06.2024
(73) Patentinhaber: Voith Patent GmbH, 89522 Heidenheim (DE)
(72) Erfinder: MACK, Reiner, 89547 Dettingen (DE)
(74) Vertreter: Voith Patent GmbH - Patentabteilung
(86) Internationale Anmeldenummer: PCT/EP2022/061493
(87) Internationale Veröffentlichungsnummer: WO 2023/011774

(56) Entgegenhaltungen:
- EP-B1- 1 337 753
- EP-B1- 3 647 585
- CH-A- 216 126
- DE-A1- 102009 004 816
- FR-A1- 2 941 639

## Beschreibung

Die vorliegende Erfindung betrifft allgemein ein Bauteil einer hydroelektrischen Turbine mit erhöhter Lebensdauer und ein Verfahren zur Herstellung des Bauteils. Insbesondere betrifft die vorliegende Erfindung ein Bauteil einer hydroelektrischen Turbine mit einem beschichteten keilförmigen Substrat und ein Verfahren zur Bereitstellung und Beschichtung des keilförmigen Substrats.

Erosionsbeständige Beschichtungen werden häufig auf Komponenten von Wasserkraftturbinen verwendet, wie z. B. Laufräder und Leitschaufeln für Francis- und Kaplan-Turbinen, Laufräder und Nadeln für Pelton-Turbinen und verschiedene andere Komponenten, die anfällig für Erosion durch im Triebwasser enthaltene Sedimente sind.

So offenbart z.B. die EP 3 647 585 B1 ein Bauteil einer hydroelektrischen Turbine, das ein keilförmiges Substrat mit einem Spitzenabschnitt und mindestens zwei Seitenabschnitten umfasst, wobei eine erosionsbeständige Beschichtung auf dem keilförmigen Substrat aufgebracht ist, und wobei die erosionsbeständige Beschichtung, die auf dem Spitzenabschnitt aufgebracht ist, mindestens 2 Mal stärker ist als die erosionsbeständige Beschichtung, die auf den Seitenabschnitten aufgebracht ist, und wobei die erosionsbeständige Beschichtung mindestens 99,5% Dichte umfasst. Dabei erfolgt die Applikation der erosionsbeständigen Beschichtung durch den Hochgeschwindigkeits-Air-Fuel-Prozess (HVAF).

Die EP 2 213 407 B1 offenbart ein Bauteil einer hydroelektrischen Turbine, das eine Verkleidung umfasst, welche durch ein massives Keramikelement gebildet wird, das auf einen Metallträger gelötet ist. Der Metallträger wird dabei mit dem Hauptkörper des Bauteils mittels einer Schweißnaht verbunden.

Die EP 1 337 753 B1 offenbart ein Bauteil einer hydroelektrischen Turbine, das zwei Häute umfasst, die jeweils die Unter- und Oberseite des Bauteils bilden, wobei die Häute durch Formgießen von Verbundmaterial hergestellt sind, und wobei mindestens eine der Häute lokal mit einem Schutz gegen Abnutzung oder gegen Stöße beschichtet ist, und wobei der Schutz durch mindestens einen metallischen Einsatz gebildet wird, der in die Haut integriert oder auf dieser angebracht ist.

Die Aufgabe der Erfindung ist es, ein Bauteil einer hydroelektrischen Turbine anzugeben, das einen alternativen Aufbau aufweist, und durch ein alternatives Verfahren hergestellt wird, wobei die Beständigkeit des Bauteils gegen Erosion vergleichbar hoch ist, wie die Beständigkeit der aus dem Stand der Technik bekannten Bauteile.

Die Aufgabe wird erfindungsgemäß durch eine Ausführung entsprechend dem unabhängigen Anspruch gelöst. Weitere vorteilhafte Ausführungsformen der vorliegenden Erfindung finden sich in den Unteransprüchen.

Im Folgenden wird die Erfindung anhand von Figuren erläutert. Die Figuren zeigen im Einzelnen:
- Fig.1: Erfindungsgemäßes Turbinenbauteil
- Fig.1a: Erfindungsgemäßes Turbinenbauteil
- Fig.2: Erfindungsgemäßes Turbinenbauteil
- Fig.2a: Erfindungsgemäßes Turbinenbauteil

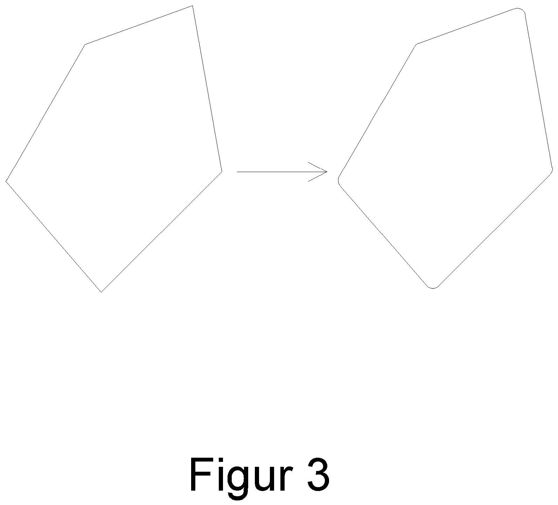

- Fig.3: Hartpartikel

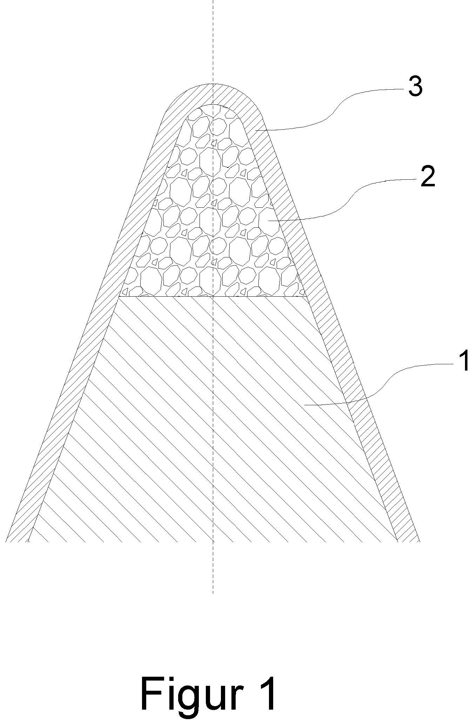

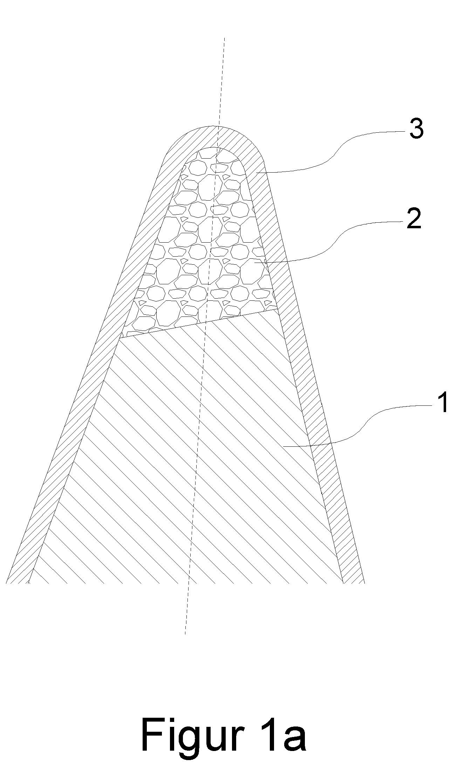

Figur 1 zeigt ein erfindungsgemäßes Turbinenbauteil in schematischer Darstellung. Das Turbinenbauteil umfasst ein keilförmiges Substrat und eine erosionsbeständige das Substrat überziehende Beschichtung, wobei die Beschichtung mit 3 bezeichnet ist. Das keilförmige Substrat umfasst einen Grundkörper, welcher mit 1 bezeichnet ist und einen darauf aufsitzenden Spitzenabschnitt, welcher mit 2 bezeichnet ist. Der Grundkörper 1 besteht aus einem Material, welches herkömmlich für das betreffende Turbinenbauteil verwendet wird. In der Regel ist dies Stahl. Der Spitzenabschnitt 2 bildet eine Panzerung des Turbinenbauteils gegen unerwünschte Erosionsschäden.

Der Spitzenabschnitt 2 läuft in einer Spitze aus, welche die Spitze des keilförmigen Substrates darstellt.

Der Spitzenabschnitt 2 besteht aus einer metallischen Matrix, in welche Partikel eines sehr harten Materials eingebettet sind. Als Material für diese Hartpartikel wird vorzugsweise Wolframkarbid verwendet, welches sich durch seine große Härte auszeichnet, welche beinahe der Härte von Diamant gleichkommt. Weitere geeignete Materialien für Hartpartikel und Details hierzu werden im Abschnitt [0028] der EP 3 647 585 B1 genannt. Geeignete Materialien für die Matrix sind beispielsweise Ni, FeCrAl oder CrNiBoSi.

Die Verbindung zwischen Grundkörper 1 und Spitzenabschnitt 2 wird durch ein Verfahren bewerkstelligt, welches in einer interkristallinen Verbindung zwischen Grundkörper 1 und der Matrix des Spitzenabschnittes 2 resultiert, d.h. durch ein geeignetes Schweißverfahren. Geeignete und vorteilhafte Schweißverfahren sind beispielsweise das sogenannte Laser-Pulver-Schweißen oder das Laser-Handschweißen. Beim Laser-Pulver-Schweißen wird ein pulverförmiger Zusatzwerkstoff mit Laserenergie auf den Grundkörper aufgeschweißt. Das Pulver ist erfindungsgemäß ein Gemisch aus den Hartpartikeln und dem pulverförmigen Material der Matrix. Beim Laser-Handschweißen kommt ein Schweißdraht zum Einsatz, welcher als Hohldraht ausgebildet ist, und wobei die Hülle des Drahtes erfindungsgemäß aus dem Material der Matrix gebildet wird und im Inneren der Hülle die Hartpartikel angeordnet sind. Beim Schweißen wird der Draht auf den Grundkörper gehalten und mit Laserenergie mit demselben verschweißt. Beide Schweißverfahren sind Auftragsschweißverfahren. Der Spitzenabschnitt 2 wird dabei in der Regel in mehreren Schichten aufgebaut, wobei dann eine zuvor aufgetragene Schicht als Grundlage für eine als nächstes aufzutragende Schicht dient.

Nachdem das keilförmige Substrat auf diese Weise gebildet wurde, wird die erosionsbeständige Beschichtung aufgebracht. Zu den geeigneten Materialien und Zusammensetzungen der erosionsbeständigen Beschichtung wird auf die Abschnitte [0027] und [0028] der EP 3 647 585 B1 verwiesen. Als besonders geeignet wird die Kombination von Wolframkarbid-Partikeln mit einer Matrix aus CoCr angesehen. Erfindungsgemäß kann die Beschichtung mittels HVOF oder HVAF erfolgen. Als bevorzugt geeignet wird HVOF betrachtet. Details zu diesen Verfahren können der EP 3 647 585 B1 entnommen werden.

In der Darstellung von Figur 1 ist das erfindungsgemäße Turbinenbauteil sehr symmetrisch aufgebaut. Die gestrichelte Linie stellt dabei die Symmetrieachse der keilförmigen Struktur des Turbinenbauteils dar. Die Grenzlinie zwischen Grundkörper 1 und Spitzenabschnitt 2 verläuft senkrecht zu dieser Achse. Ein solcher symmetrischer Aufbau des Turbinenbauteils kommt vorteilhaft z.B. bei der zentralen Schneide eines Bechers eines Pelton-Turbinenlaufrades zum Einsatz. Bei anderen Turbinenbauteilen kann ein weniger symmetrischer Aufbau von Vorteil sein. Figur 1a zeigt beispielhaft einen Aufbau, welcher nicht strengsymmetrisch ausgebildet ist. Als Achse dient in diesem Fall die Winkelhalbierende zwischen den Flanken des keilförmigen Substrates. Die Grenzlinie zwischen Grundkörper 1 und Spitzenabschnitt 2 verläuft im dargestellten Beispiel nicht senkrecht zu dieser Achse. Dies kann dann von Vorteil sein, wenn die Flanken unterschiedlich stark beansprucht werden. Die Grenzlinie könnte aber auch senkrecht verlaufen. Weitere Abweichungen zu den Darstellungen gemäß Figur 1 und 1a könnten darin bestehen, dass die Flanken eines erfindungsgemäßen Bauteils eine Krümmung aufweisen. Diese Krümmungen könnten für jede Flanke unterschiedlich sein. Außerdem könnte die Grenzlinie zwischen Grundkörper 1 und Spitzenabschnitt 2 eine Krümmung aufweisen. Zur weiteren Verstärkung der Verbindung zwischen Grundkörper 1 und Spitzenabschnitt 2 könnte die Grenzfläche eine Riffelung oder eine Zahnung aufweisen.

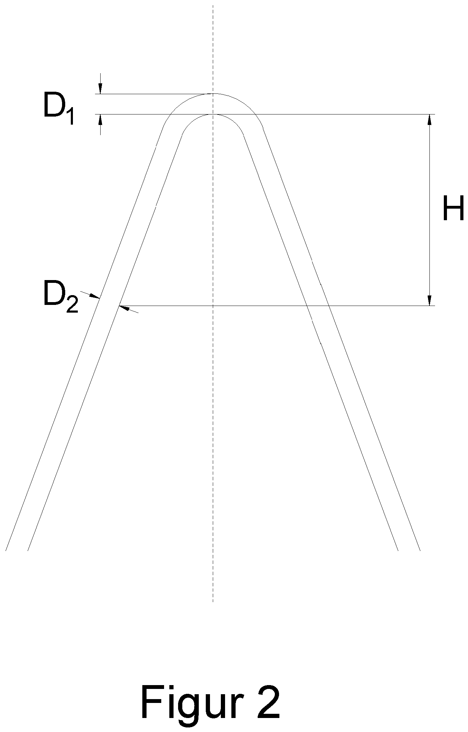

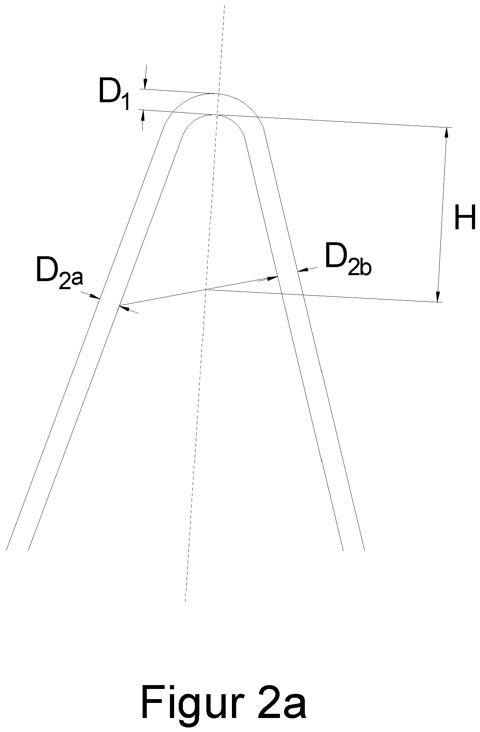

Die Figuren 2 und 2a dienen zur Illustration von definierten Maßen eines erfindungsgemäßen Turbinenbauteils. Das Maß H quantifiziert die Höhe des Spitzenabschnitts 2 bzw. der Panzerung. Wenn das Turbinenbauteil einen unsymmetrischen Aufbau hat, wird H an den in Figur 2a gezeigten Schnittpunkten der gestrichelten Achse abgetragen. D₁ ist die Dicke der Beschichtung an der Spitze des keilförmigen Substrates. D₂ ist die Dicke der Beschichtung an der Grenzlinie zwischen Grundkörper 1 und Spitzenabschnitt 2. Die Schichtdicke an beiden Flanken kann differieren, was von Vorteil sein kann, wenn die Belastung der Flanken unterschiedlich groß ist. D.h. in Bezugnahme zu Figur 2a könnten D₂ₐ und D_{2b} unterschiedlich groß sein. In diesem Fall ist D₂ der größere Wert der beiden genannten.

Die erfindungsgemäße Anordnung zeichnet sich u.a. durch eine unter der Beschichtung liegenden Panzerung aus. Dadurch kann auch mit einer moderaten Dicke der Beschichtung ein ausgezeichneter Schutz gegen Erosion sichergestellt werden. Eine moderate Dicke der Beschichtung bietet außerdem den Vorteil, dass es durch die Beschichtung zu einer geringeren Abrundung der Bauteilspitze kommt. Bei den Schneiden der Pelton-Becher beispielsweise führt ein geringerer Radius an der Schneide automatisch zu einem höheren Wirkungsgrad. Zudem kann der Aufwand für die Beschichtung klein gehalten werden. Ausgezeichnete Erosionsstandfestigkeit wird bereits mit Schichtdicken an der Spitze des keilförmigen Substrates in einem Bereich von 0,3 mm ≤ D₁ ≤ 0,7 mm erreicht, wenn außerdem H ≥ D₁ gewählt wird. Sehr gute Ergebnisse lassen sich mit einer homogenen Schichtdicke im keilförmigen Bereich des betreffenden Bauteils erzielen, das bedeutet u.a. D₁ = D₂. Die Standfestigkeit lässt sich noch weiter steigern, wenn die Dicke der Beschichtung am Übergangsbereich zwischen Grundkörper 1 und Spitzenabschnitt 2 ausreichend stark ausgelegt wird. Vorteilhaft ist hierzu, wenn D₂ wenigsten 1,2 * D₁ ist.

Der Erfinder hat erkannt, dass die Einbettung von Hartpartikeln in eine metallische Matrix zu Spannungen führen kann, welche bei hoher Sichtdicke und/oder mechanischen Belastungen zu Rissen in der Matrix führen kann. Solche Risse setzten die Lebensdauer der Beschichtung bzw. der Panzerung herab. Die gängigen Hartpartikel sind von kristallinem Aufbau und weisen daher in der Regel eine Oberfläche mit scharfe Kanten und Spitzen auf. An solchen Stellen treten vermehrt Spannungen auf, wenn die Partikel in die metallische Matrix eingebettet werden. Der Erfinder hat erkannt, dass dieser schädliche Effekt reduziert werden kann, wenn die Kanten und Spitzen der Partikel vor dem Einbetten in die Matrix leicht abgerundet bzw. gebrochen werden. Dazu können die Partikel beispielsweise in eine Tonne gefüllt werden, welche dann über einen ausreichend langen Zeitraum in Rotation gehalten wird. Die in der Tonne befindlichen Partikel arbeiten sich dabei gegenseitig ab, wodurch die Kanten und Spitzen derselben weniger scharf werden. Figur 4 zeigt diesen Effekt in schematischer Form.

Das erfindungsgemäße Herstellungsverfahren umfasst folgende Schritte in der angegebenen Reihenfolge:
S1: Bereitstellung eines Grundkörpers 1;
S2: Aufbringung einer Panzerung 2 auf den Grundkörper 1, wodurch ein keilförmiges Substrat gebildet wird;
S3: Aufbringung einer erosionsbeständigen Beschichtung 3 auf das keilförmige Substrat.

Vor den Schritten S2 und S3 kann jeweils ein Schritt ausgeführt werden, in dem die in den Schritten S2 bzw. S3 verwendeten Hartpartikel abgerundet werden.

### Bezugszeichenliste

- 1: Grundkörper
- 2: Spitzenabschnitt bzw. Panzerung
- 3: Beschichtung

## Patentansprüche

1. Bauteil einer hydroelektrischen Turbine mit einem keilförmigen Substrat und einer erosionsbeständigen das Substrat überziehenden Beschichtung (3), wobei das Substrat einen Grundkörper (1) und einen darauf aufsitzenden Spitzenabschnitt (2) umfasst, welcher eine Panzerung des Bauteils gegen Erosionsschäden bildet, und wobei der Spitzenabschnitt (2) in einer Spitze ausläuft, und wobei der Spitzenabschnitt (2) aus einer metallischen Matrix besteht, in welche Partikel eines sehr harten Materials eingebettet sind, und wobei die Dicke der Beschichtung (3) an der Spitze des Spitzenabschnittes D₁ beträgt, und wobei die Höhe des Spitzenabschnittes (2) H beträgt, und wobei H≥ D₁ ist, **dadurch gekennzeichnet, dass** der Spitzenabschnitt (2) mit dem Grundkörper (1) durch eines der folgenden Auftragsschweißverfahren verbunden ist, so dass die Matrix des Spitzenabschnittes (2) mit dem Grundkörper (1) eine interkristalline Verbindung bildet:
- Laser-Pulver-Schweißen, wobei das Pulver ein Gemisch aus den Partikeln und dem pulverförmigen Material der Matrix ist;
- Laser-Handschweißen, wobei ein Schweißdraht verwendet wird, welcher als Hohldraht ausgebildet ist, und wobei die Hülle des Drahtes aus dem Material der Matrix gebildet wird, und im Inneren der Hülle die Partikel angeordnet sind.

2. Bauteil nach Anspruch 1, wobei die Dicke der Beschichtung an einer Grenzlinie zwischen Grundkörper (1) und Spitzenabschnitt (2) D₂ beträgt, und wobei D₂ ≥ 1,2 * D₁ ist.

3. Bauteil nach Anspruch 1 oder 2, wobei die Matrix aus Ni, FeCrAl oder CrNiBoSi besteht.

4. Bauteil nach einem der vorherigen Ansprüche, wobei die Partikel abgerundete Kanten aufweisen.

5. Bauteil nach einem der vorherigen Ansprüche, wobei die Beschichtung (3) aus einer Matrix aus CoCr mit eingebetteten Wolframkarbid-Partikeln besteht.

6. Bauteil nach Anspruch 5, wobei die Wolframkarbid-Partikel abgerundete Kanten aufweisen.

7. Verfahren zur Herstellung eines Bauteils einer hydroelektrischen Turbine gemäß einem der vorangehenden Ansprüche, wobei das Verfahren die folgenden Schritte in der angegebenen Reihenfolge umfasst:
S1: Bereitstellung des Grundkörpers (1);
S2: Aufbringung der Panzerung (2) auf den Grundkörper (1), wodurch ein keilförmiges Substrat gebildet wird;
S3: Aufbringung der erosionsbeständigen Beschichtung (3) auf das keilförmige Substrat,
wobei die Aufbringung der Panzerung (2) durch ein Auftragsschweißverfahren erfolgt, und wobei das
Auftragsschweißverfahren eines der folgenden Verfahren ist:
- Laser-Pulver-Schweißen, wobei das Pulver ein Gemisch aus den Partikeln und dem pulverförmigen Material der Matrix ist;
- Laser-Handschweißen, wobei ein Schweißdraht verwendet wird, welcher als Hohldraht ausgebildet ist, und wobei die Hülle des Drahtes aus dem Material der Matrix gebildet wird, und im Inneren der Hülle die Partikel angeordnet sind.

## Claims

1. Component of a hydroelectric turbine with a wedge-shaped substrate and an erosion-resistant coating (3) covering the substrate, wherein the substrate comprises a base body (1) and a tip section (2) seated thereon, which forms an armouring of the component against erosion damage, and wherein the tip section (2) terminates in a tip, and wherein the tip section (2) consists of a metallic matrix in which particles of a very hard material are embedded, and wherein the thickness of the coating (3) at the tip of the tip section is D₁, and wherein the height of the tip section (2) is H, and wherein H≥ D₁, **characterised in that** the tip section (2) is joined to the base body (1) by one of the following build-up welding processes, so that the matrix of the tip section (2) forms an intercrystalline bond with the base body (1):
- Laser powder welding, wherein the powder is a mixture of the particles and the powdery material of the matrix;
- manual laser welding, wherein a welding wire is used which is designed as a hollow wire, and wherein the sheath of the wire is formed from the material of the matrix, and the particles are arranged inside the sheath

2. Component according to claim 1, wherein the thickness of the coating at a boundary line between the base body (1) and the tip portion (2) is D₂, and wherein D₂ is ≥ 1.2 * D₍₁₎.

3. Component according to claim 1 or 2, wherein the matrix consists of Ni, FeCrAl or CrNiBoSi.

4. Component according to any one of the preceding claims, wherein the particles have rounded edges.

5. Component according to one of the preceding claims, wherein the coating (3) consists of a matrix of CoCr with embedded tungsten carbide particles.

6. Component according to claim 5, wherein the tungsten carbide particles have rounded edges.

7. A method of manufacturing a hydroelectric turbine component according to any one of the preceding claims, the method comprising the following steps in the order given:
S1: Providing the base body (1);
S2: applying the armouring (2) to the base body (1), thereby forming a wedge-shaped substrate;
S3: applying the erosion-resistant coating (3) to the wedge-shaped substrate,
wherein the application of the armour (2) is performed by a build-up welding process, and wherein the build-up welding process is one of the following processes:
- Laser powder welding, wherein the powder is a mixture of the particles and the powdered material of the matrix;
- manual laser welding, wherein a welding wire is used which is formed as a hollow wire, and wherein the sheath of the wire is formed from the material of the matrix, and the particles are arranged inside the sheath.

## Revendications

1. Composant de turbine hydroélectrique comprenant un substrat en forme de coin et un revêtement (3) résistant à l'érosion recouvrant le substrat, dans lequel le substrat comprend un corps de base (1) et une partie de pointe (2) reposant sur celui-ci, qui forme un blindage du composant contre les dommages dus à l'érosion, et dans lequel la partie de pointe (2) se termine par une pointe, et dans lequel la partie de pointe (2) est constituée d'une matrice métallique, dans laquelle sont noyées des particules d'un matériau très dur, et dans laquelle l'épaisseur du revêtement (3) à la pointe de la partie de pointe est D₁, et dans laquelle la hauteur de la partie de pointe (2) est H, et dans laquelle H≥ est D₁, **caractérisée en ce que** la partie de pointe (2) est liée au corps de base (1) par l'un des procédés de soudage par rechargement suivants, de sorte que la matrice de la partie de pointe (2) forme avec le corps de base (1) une liaison intercristalline :
- Soudage laser à la poudre, la poudre étant un mélange des particules et du matériau en poudre de la matrice ;
- soudage manuel au laser, dans lequel on utilise un fil de soudage qui est conçu comme un fil creux, et dans lequel la gaine du fil est formée du matériau de la matrice, et les particules sont disposées à l'intérieur de la gaine.

2. Composant selon la revendication 1, dans lequel l'épaisseur du revêtement à une ligne limite entre le corps de base (1) et la partie de pointe (2) est D₂, et dans lequel D₂ est ≥ 1,2 * D₁.

3. Composant selon la revendication 1 ou 2, dans lequel la matrice est constituée de Ni, FeCrAl ou CrNiBoSi.

4. Composant selon l'une quelconque des revendications précédentes, dans lequel les particules ont des bords arrondis.

5. Composant selon l'une quelconque des revendications précédentes, dans lequel le revêtement (3) est constitué d'une matrice de CoCr dans laquelle sont noyées des particules de carbure de tungstène.

6. Composant selon la revendication 5, dans lequel les particules de carbure de tungstène ont des bords arrondis.

7. Procédé de fabrication d'un composant de turbine hydroélectrique selon l'une quelconque des revendications précédentes, ledit procédé comprenant les étapes suivantes dans l'ordre indiqué :
S1 : fourniture du corps de base (1) ;
S2 : application du blindage (2) sur le corps de base (1), formant ainsi un substrat en forme de coin ;
S3 : application du revêtement résistant à l'érosion (3) sur le substrat cunéiforme,
dans lequel l'application du blindage (2) est effectuée par un procédé de soudage par rechargement, et dans lequel le procédé de soudage par rechargement est l'un des procédés suivants :
- Soudage par poudre laser, dans lequel la poudre est un mélange des particules et du matériau en poudre de la matrice ;
- Soudage manuel au laser, dans lequel on utilise un fil de soudage qui est conçu comme un fil creux, et dans lequel la gaine du fil est formée du matériau de la matrice, et les particules sont disposées à l'intérieur de la gaine.
